(19) Europäisches Patentamt
European Patent Office
Office européen des brevets

(11) **EP 4 357 413 A1**

(12) **EUROPEAN PATENT APPLICATION**

(43) Date of publication:
**24.04.2024 Bulletin 2024/17**

(21) Application number: **22202295.6**

(22) Date of filing: **18.10.2022**

(51) International Patent Classification (IPC):
***C08L 23/12*** *(2006.01)*

(52) Cooperative Patent Classification (CPC):
(C-Sets available)
**C08L 23/12;** C08L 2203/16; C08L 2205/03;
C08L 2207/20                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Basell Poliolefine Italia S.r.l.
20121 Milano (IT)**

(72) Inventors:
• **DESTRO, Mara
44122 Ferrara (IT)**
• **FIORAVANTI, Riccardo
44122 Ferrara (IT)**

(74) Representative: **LyondellBasell
c/o Basell Poliolefine Italia
Intellectual Property
P.le Donegani 12
44122 Ferrara (IT)**

(54) **PROCESS FOR LOWERING THE MELT FLOW RATE OF A RECYCLED POLYMER COMPOSITION**

(57)    A process for lowering the melt flow rate of a recycled polymer composition comprising at least 50 wt% of a recycled polypropylene composition and comprising at least 5 wt% of a polar polymer comprising:
a) providing a recycled polymer composition;
b) adding to the composition from 2 wt% to 10 wt% based on the weight of the total composition an ethylene-al-fa-olefin copolymer or ethylene-alfa-olefin terpolymer grafted with maleic anhydride.

c) melting the composition comprising component a) and b) and
d) recover the final polymer.

EP 4 357 413 A1

(52) Cooperative Patent Classification (CPC): (Cont.)

C-Sets
**C08L 23/12, C08L 23/0861, C08L 53/025**

**Description**

FIELD OF THE INVENTION

The present disclosure relates to a process for lowering the melt flow rate of a polymer composition containing at least 50 wt% of a recycled polypropylene composition and at least 5 wt% of polar polymers such as EVOH.

BACKGROUND OF THE INVENTION

It is well known in the art that in order to recycle a propylene based composition the latter has to be melted one or more time. The melting usually worse some of the properties of the polymer and above all the melt flow rate (MFR) becomes higher. In fact the recycled polypropylene usually on the market has an MFR, determined according to the method ISO 1133 (230° C, 2.16 kg) of about 10 g/10 min that is a value usually used for producing injection molded articles. It would be desirable to have a process able to lower this MFR so that the recycled composition can be used for applications different from injection molding such as for producing films such as cast, blow and BOPP films. The applicant found that in a recycled polymer composition comprising at least 50 wt% of a recycled polypropylene composition and at least 5 wt% of polar polymers it is possible to lower the MFR by adding a third component and extrude the composition.

SUMMARY OF THE INVENTION

Thus an object of the present disclosure is a process for lowering the melt flow rate of a recycled polymer composition comprising at least 50 wt% of a recycled polypropylene composition, and at least 5 wt% of a polar polymer, said process comprising:

a) providing recycled polymer composition comprising at least 50 wt% of a recycled polypropylene composition, and at least 5 wt% of a polar polymer;
b) adding to the composition from 2 wt% to 10 wt% based on the weight of the total composition of styrene-ethylene/butylene block copolymer grafted with maleic anhydride (g-MAH);
c) melting the composition comprising component a) and b) and
d) recover the final polymer.

DETAILED DESCRIPTION OF THE IN VENTION

Preferably the recycled polymer composition comprises at least 60 wt% of recycled polypropylene composition, based on the total weight of the recycled polymer composition, preferred range is from 60wt% to 76 wt%.
Preferably the recycled polymer composition comprises at least 7 wt% preferably at least 10 wt%, more preferably at least 15 wt% of the polar polymer. Preferred range is from 5 wt% to 25 wt%. A polar polymer is defined as a polymer containing polar groups such as alcohol (-OH), ether (-O-), carboxylic acid (-COOH), amine (-NH2), nitrile (-CN), thiol (-SH) groups. Examples of polar polymer can be polyamide, polycarbonate, poly(,ethyl methacrylate), Acrylonitrile, butadiene, styrene terpolymer, ethylene vinyl alcohol polymer (EVOH). Preferably the polar polymer is EVOH.
The ethylene-alfa-olefin copolymer or ethylene-alfa-olefin terpolymer optionally containing unconjugated diene are preferably added in a range from 4.0 wt% to 9.0wt%; morepreferablu from 6.0 wt% to 8.5 wt%. The ethylene-alfa-olefin copolymer or ethylene-alfa-olefin terpolymer optionally containing unconjugated diene are for example ethylene proplylene copolymer, ethylene 1-butene copolymer, ethylene 1-hexene copolymer and ethylene 1-octene copolymer, these copolymers being grafted with maleic anhydride (g-MAH). Particularly preferred are maleic-anhydride-modified ethylene-propylene copolymer.
Examples of styrene-ethylene/butylene block copolymer grafted with maleic anhydride (g-MAH) are Cirkula+C1010 or Cirkula+C1000 or Cirkula+C2000 or Cirkula+C3000:
Preferably the Melt Flow Rate of the recycled polypropylene composition, starting material of the process, determined according to the method ISO 1133 (230° C, 2.16 kg), ranges from 10 g/10 min to 150 g/10 min; preferably from 20 g/10 min to 100 g/10 min, more preferably from 25 g/10 min to 80 g/10 min.
The recycled polypropylene composition contains preferably at least 50 wt%; more preferably at least 60 wt% ; even more preferably at least 65 wt% of derived units of propylene. The remaining comonomers can be ethylene; 1-butene; 1-hexene or 1-octene derived units; ethylene being preferred. Examples of propylene based polymer can be propylene homopolymer, propylene, ethylene heterophasic polymer, propylene ethylene 1-butene, propylene ethylene 1-hexene terpolymers and mixtures thereof. The recycled polypropylene composition can be contaminated with other polymers such as polyamide, polycarbonate, poly(,ethyl methacrylate), Acrylonitrile, butadiene, styrene termpolymer, ethylene vynyl alcohol polymer (EVOH).

The final polymer obtainable with the process of the present disclosure is a recycled polypropylene composition having an high MFRDetermined according to the method ISO 1133 (230° C, 2.16 kg). Preferably the MFR Determined according to the method ISO 1133 (230° C, 2.16 kg) of the recycled polypropylene composition obtainable with the process of the present disclosure depends from the starting $MFR_{init}$. The MFR that can be obtained ranges from $MFR_{init}$ /1.2 to $MFR_{init}$ /5.0; preferably ranges from $MFR_{init}$;1.9 to $MFR_{init}$/4.0. More preferably the MFR ranges from 1.3 g/10 min to 8.0 g/10min; even more preferably ranges from 1.5 g/10 min to 5.8 g/10min;.

The final polymer obtainable with the process of the present disclosure that is a recycled polypropylene composition can be used for examples for obtaining films, in particular cast, BOPP and Blow films.

The following examples are given to illustrate the present invention without limiting purpose.

EXAMPLE

**Characterization methods**

**Melting temperature and crystallization temperature:** Determined by differential scanning calorimetry (DSC)

. weighting $6 \pm 1$ mg, is heated to $220 \pm 1°$ C at a rate of 20 °C/min and kept at $220 \pm 1°$ C for 2 minutes in nitrogen stream and it is thereafter cooled at a rate of 20° C/min to $40 \pm 2°$ C, thereby kept at this temperature for 2 min to crystallize the sample. Then, the sample is again fused at a temperature rise rate of 20° C/min up to 220° C $\pm 1$. The melting scan is recorded, a thermogram is obtained, and, from this, melting temperatures and crystallization temperatures are read.

**Melt Flow Rate:** Determined according to the method ISO 1133 (230° C, 2.16 kg).

**Xylene-soluble fraction (XS) at 25°C**

Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C.

**Intrinsic Viscosity (I.V.)**

The sample is dissolved by tetrahydronaphthalene at 135 °C and then it is poured into the capillary viscometer.

The viscometer tube (Ubbelohde type) is surrounded by a cylindrical glass jacket; this setup allows temperature control with a circulating thermostated liquid.

The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through

**Haze (on 1 mm plaque)**

According to the method used, 5x5 cm specimens are cut molded plaques of 1 mm thick and the haze value is measured using a Gardner photometric unit connected to a Hazemeter type UX-10 or an equivalent instrument having G.E. 1209 light source with filter "C". Reference samples of known haze are used for calibrating the instrument. The plaques to be tested are produced according to the following method.

$75 \times 75 \times 1$ mm plaques are molded with a GBF Plastiniector G235190 Injection

Molding Machine, 90 tons under the following processing conditions:

Screw rotation speed: 120 rpm
Back pressure: 10 bar
Melt temperature: 260°C
Injection time: 5 sec
Switch to hold pressure: 50 bar
First stage hold pressure: 30 bar
Second stage pressure: 20 bar
Hold pressure profile: First stage 5 sec
Second stage 10 sec
Cooling time: 20 sec

Mold water temperature: 40°C

**Ethylene content in the copolymers**

$^{13}$C NMR spectra were acquired on a Bruker AV-600 spectrometer equipped with cryoprobe, operating at 160.91 MHz in the Fourier transform mode at 120 °C.

The peak of the Sββ carbon (nomenclature according to "Monomer Sequence Distribution in Ethylene-Propylene Rubber Measured by $^{13}$C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane*d2* at 120 °C with a 8 % wt/v concentration. Each spectrum was acquired with a 90° pulse, and 15 seconds of delay between pulses and CPD to remove $^1$H-$^{13}$C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethylaluminum chloride" M. Kakugo, Y. Naito, K. Mizunuma and T. Miyatake, Macromolecules, 1982, 15, 1150) using the following equations:

$$PPP = 100 \ T\beta\beta/S \qquad PPE = 100 \ T\beta\delta/S \qquad EPE = 100 \ T\delta\delta/S$$

$$PEP = 100 \ S\beta\beta/S \qquad PEE = 100 \ S\beta\delta/S \qquad EEE = 100 \ (0.25 \ S\gamma\delta + 0.5 \ S\delta\delta)/S$$

$$S = T\beta\beta + T\beta\delta + T\delta\delta + S\beta\beta + S\beta\delta + 0.25 \ S\gamma\delta + 0.5 \ S\delta\delta$$

The molar percentage of ethylene content was evaluated using the following equation:

$$E\% \ mol = 100 * [PEP+PEE+EEE]$$

The weight percentage of ethylene content was evaluated using the following equation:

$$E\% \ wt. = \frac{100 * E\% \ mol * MWE}{E\% \ mol * MWE + \ P\% \ mol * MWP}$$

where P% mol is the molar percentage of propylene content, while MWE and MWP are the molecular weights of ethylene and propylene, respectively.

The product of reactivity ratio rlr2 was calculated according to Carman (C.J. Carman, R.A. Harrington and C.E. Wilkes, Macromolecules, 1977; 10, 536) as:

$$r_1 r_2 = 1 + \left( \frac{EEE + PEE}{PEP} + 1 \right) - \left( \frac{P}{E} + 1 \right) \left( \frac{EEE + PEE}{PEP} + 1 \right)^{0.5}$$

The tacticity of Propylene sequences was calculated as mm content from the ratio of the PPP mmT$_{\beta\beta}$ (28.90-29.65 ppm) and the whole Tpp (29.80-28.37 ppm).

**Preparation of the film specimens**

Films with a thickness of 50 micron are prepared by extruding each composition in a a single screw Collin extruder (length/diameter ratio of screw 1 :25) at a film drawing speed of 7 m/min and a melt temperature do 210-250 °C.

**Determination of the number of gels per m[2]**

The determination of the number of gels per **m[2]** is carried out by visually detecting the number of gels of a sample film projected by a projector on a white wall-chart with a magnificated scale. Film pieces of 130 × 7.5 cm are cut from a cast film at least 30 minutes after extrusion (die temperature in the range from 250° to 290°C, chill rolls temperature 20°C). The cast film is prepared as above described.

The counting is made on 5 different pieces of the same film and a final number is given by the expression No=A/S where No is the number of gels per $m^2$, A is the number of gels counted on 5 film pieces and S is the overall surface in $m^2$ of the 5 films pieces examined. Gels of irregular shape are measured at the point of maximum extension.

A commercial propylene ethylene random copolymer sold by lyondellbasell as Moplen RP320M has been used to emulate the recycled polymer composition. The random copolymer has the features reported on table 1

Table 1

| MFR | g/10' | 8.5 |
|---|---|---|
| Tensile Modulus | MPa | 850 |
| Charpy impact strength 23°C | $Kj/m^2$ | 7 |
| Charpy impact strength 0°C | $Kj/m^2$ | 2 |

The random copolymer has been blended with Cirkular+C1010 a styrene-ethylene/butylene block copolymer sold by Kraton, grafted with maleic anhydride. The compositions are reported on table 2

Table 2

| | | comp Ex 1 | ex 2 | comp ex 3 | comp ex 4 | ex 5 | comp ex 6 |
|---|---|---|---|---|---|---|---|
| RP320M | wt% | 90 | 85 | 85 | 80 | 72 | 72 |
| EVOH | wt% | 10 | 10 | 10 | 20 | 20 | 20 |
| Cirkular+C1010 | wt% | 0 | 5 | 0 | 0 | 8 | 0 |
| RETAIN3000 | wt% | 0 | 0 | 5 | 0 | 0 | 8 |

The composition of table 2 have been extruded and cast film are produced, the results of the final polymer are reported on table 3

Table 3

| | | comp Ex 1 | ex 2 | comp ex 3 | comp ex 4 | ex 5 | comp ex 6 |
|---|---|---|---|---|---|---|---|
| MFR | g/10 min | 10.08 | 5.44 | 7.29 | 11.5 | 2.8 | 6.1 |
| Tm | °C | 146 | 144 | 144 | 146 | 144 | 144 |
| Tc | °C | 109 | 101 | 104 | 101.6 | 102 | 101.3 |
| gel count on cast film diameter $\geq 0.1$ | $n/m^2$ | 70 | - | 1200 | 310 | 70 | 100 |

From table 3 clearly results that the MFR of the examples of the invention is lower and at the same time the gel count of example 5 is lower.

**Claims**

1. A process for lowering the melt flow rate of a recycled polymer composition comprising at least 50 wt% of a recycled polypropylene composition, and at least 5 wt% of a polar polymer, said process comprising:

   a) providing recycled polymer composition comprising at least 50 wt% of a recycled polypropylene composition, and at least 5 wt% of a polar polymer;
   b) adding to the composition from 2 wt% to 10 wt% based on the weight of the total composition of styrene-ethylene/butylene block copolymer grafted with maleic anhydride (g-MAH);
   c) melting the composition comprising component a) and b) and

d) recover the final polymer.

**2.** The process according to claim 1 wherein styrene-ethylene/butylene block copolymer grafted with maleic anhydride is added in an amount from 4.0 wt% to 9.0wt%, based on the total weight of the composition.

**3.** The process according to any of claims 1-2 wherein styrene-ethylene/butylene block copolymer grafted with maleic anhydride is added in an amount from 6.0 wt% to 8.5wt%, based on the total weight of the composition.

**4.** The process according to any of claims 1-4 wherein the recycled polymer composition comprises at least 60 wt% of recycled polypropylene composition.

**5.** The process according to any of claims 1-5 wherein the recycled polymer composition comprises from 60 wt% to 76 wt% of the recycled polypropylene composition.

**6.** The process according to any of claims 1-6 wherein t the recycled polymer composition comprises at least 7 wt% of the polar polymer.

**7.** The process according to any of claims 1-7 wherein the recycled polymer composition comprises at least 10 wt% of the polar polymer.

**8.** The process according to any of claims 1-7 w wherein the recycled polymer composition comprises at least 15 wt% of the polar polymer.

**9.** The process according to any of claims 1-8 wherein the polar polymer is selected from the group consisting of polyamide, polycarbonate, poly(,ethyl methacrylate), Acrylonitrile, butadiene, styrene terpolymer and ethylene vinyl alcohol polymer (EVOH).

**10.** The process according to any of claims 1-9 wherein the polar polymer is ethylene vinyl alcohol polymer (EVOH).

**11.** Film obtainable with the final polymer of the process of claims 1-12.

**15.** The film of claim 11 being a cast film.

Europäisches
Patentamt

European
Patent Office

Office européen
des brevets

# EUROPEAN SEARCH REPORT

**Application Number**

EP 22 20 2295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2012 0021630 A (UNIV KOREA RES & BUS FOUND [KR]) 9 March 2012 (2012-03-09) * examples 2,3,4,5 * | 1-12 | INV. C08L23/12 |
| X | CN 106 432 903 A (NINGBO YINZHOU KELI PLASTIC IND CO LTD) 22 February 2017 (2017-02-22) * examples 1-3 * | 1-12 | |

TECHNICAL FIELDS
SEARCHED      (IPC)

C08L

The present search report has been drawn up for all claims

| Place of search | Date of completion of the search | Examiner |
|---|---|---|
| Munich | 23 February 2023 | Rouault, Yannick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 22 20 2295**

This annex lists the patent family members relating to the patent documents cited in the above-mentioned European search report.
The members are as contained in the European Patent Office EDP file on
The European Patent Office is in no way liable for these particulars which are merely given for the purpose of information.

**23-02-2023**

| Patent document cited in search report | Publication date | Patent family member(s) | Publication date |
|---|---|---|---|
| KR 20120021630 A | 09-03-2012 | NONE | |
| CN 106432903 A | 22-02-2017 | NONE | |

For more details about this annex : see Official Journal of the European Patent Office, No. 12/82

EPO FORM P0459